# EUROPÄISCHE PATENTSCHRIFT

(11) **EP 1 157 479 B1**
(45) Veröffentlichungstag und Bekanntmachung des Hinweises auf die Patenterteilung: **11.06.2003**
(21) Anmeldenummer: 00920352.2
(22) Anmeldetag: 01.03.2000
(51) Int. Cl.: H04B 3/23

(54) **NICHTLINEARE ECHOKOMPENSATION BEI DMT-SYSTEMEN**
NON-LINEAR ECHO CANCELLATION IN DISCRETE MULTI-TONE SYSTEMS
COMPENSATION D'ECHO NON LINEAIRE DANS DES SYSTEMES A MULTITONALITE DISCRETE

(30) Priorität: 01.03.1999 DE 19908814
(43) Veröffentlichungstag der Anmeldung: 28.11.2001
(73) Patentinhaber: Infineon Technologies AG, 81669 München (DE)
(72) Erfinder: STRÄUSSNIGG, Dietmar, A-9500 Villach (AT); KOGLER, Manfred, A-9500 Villach (AT)
(74) Vertreter: Reinhard - Skuhra - Weise & Partner
(86) Internationale Anmeldenummer: DE0000625
(87) Internationale Veröffentlichungsnummer: WO00052844

(56) Entgegenhaltungen:
- EP-A- 0 498 369
- US-A- 3 647 992
- US-A- 5 778 055

## Beschreibung

Die vorliegende Erfindung betrifft eine Schaltungsanordnung zur Zweidraht-Vierdraht-Umsetzung bei einem DMT-System gemäß dem Oberbegriff des Anspruchs 1, wie aus der EP-A-0 498 369 bekannt.

Die US-A-3,647,992 offenbart eine Schaltungsanordnung zur Zweidraht-Verdraht-Umsetzung bei einem DMT-System, die mit einem digitalen Empfangsweg, einem digitalen Sendeweg sowie einem analogen Sende-Empfangsweg verbunden ist und die eine nichtlineare Echokompensation im Zeitbereich aufweist sowie eine Vorrichtung zur Adaption der nichtlinearen Echokompensation im Frequenzbereich aufweist.

Die US-A-5,778,055 offenbart eine nichtlineare Echokompensation im Zusammenhang mit einem analogen Telefonsystem.

US 5,317,596 beschreibt ein Verfahren und eine Vorrichtung zur Echokompensation bei einem mit diskreter Multitonmodulation erzeugten Signal. Bekannterweise ist eine Vollduplex-Datenübertragung die gleichzeitige Übertragung von Daten in zwei entgegengesetzten Richtungen mit teilweise überlappenden Frequenzbändern. Ein Echo tritt dabei durch das Übertreten eines zu übertragenden Signals in den am gleichen Ort befindlichen Empfänger auf, wodurch ein von der Gegenseite empfangenes Signal überlagert und verfälscht wird. Beispielsweise tritt ein Echo in einem Telefonnetzwerk auf, wenn das von einem Nutzer transmittierte Signal durch die Hybridschaltung in den Empfänger des Nutzers durchtritt. Diese Hybridschaltung kann auch als Echokanal bezeichnet werden. Ein solcher Echokanal kann durch eine endliche Anzahl von Parametern modelliert werden. Ein Echo-Kompensator schätzt daher zuerst die Parameter und faltet dann linear die Schätzung mit dem übertragenen Signal, wodurch das Echo emuliert wird. Das so erhaltene emulierte Echosignal *wird* dann von dem empfangenen Signal subtrahiert, wodurch sich im Idealfall das reine Signal ergibt.

Echo tritt hauptsächlich wegen nicht genau angepaßter Impedanzen an den Hybrid-Verbindern auf. Da die Impedanzen der Übertragungsleitungen zeitabhängig und leitungsabhängig sind, muß der Echo-Kompensator adaptiv sein. Ferner kann eine Echo-Kompensation sowohl im Zeit- als auch im Frequenzbereich eines Signals durchgeführt werden.

Bei einer Multiträgermodulation werden die zu übertragenden Daten übertragen, in dem die zu übertragenden binären digitalen Daten zuerst in Unterblöcke angeordnet werden. Diese Unterblöcke werden dann zu Blöcken fester Länge zusammengesetzt, die dann jeweils auf einem Träger aufmoduliert und übertragen werden. Die diskrete Multitonmodulation ist eine Form der Multiträgermodulation, die bei der digitalen Signalverarbeitung verwendet wird, wobei ein IFFT/FFT-Paar als Modulations/Demodulationsvektor eingesetzt wird.

In der genannten US-Patentschrift wird die Echo-Kompensation sowohl in Zeit- als auch Frequenzbereich eines Signals vorgenommen. Nachteilig ist, daß nur eine lineare Echokompensation vorgenommen wird, so daß eine vollständige Echo-Kompensation nicht erreicht wird.

Ferner sind Verfahren bekannt, bei denen die Kompensation des nichtlinearen Echosignals im Zeitbereich und die Dämpfung des linearen Echosignals vorzugsweise im Frequenzbereich erfolgt. Dadurch ergeben sich Schwierigkeiten bei der Adaption durch langsames Einschwingen und Konvergenzprobleme.

Ferner beschreibt WO 98/32241 eine Schaltungsanordnung zur Zweidraht-Vierdrahtumsetzung, worin digitale Signale eines digitalen Empfangswegs umgewandelt und über einen Hybrid auf einen analogen Sende-Empfangsweg eingekoppelt und analoge Signal des analogen Sende-Empfangswegs digitalisiert und auf einen digitalen Sendeweg eingekoppelt werden, wobei eine Echounterdrückung zwischen dem digitalen Sende- und Empfangsweg geschaltet ist. Dabei wird mittels eines Echoschätzfilters adaptiv das Verhalten der Hybridschaltung und des analogen Sende-Empfangswegs angenähert. Dabei erfolgt die Echokompensation sowohl im Frequenz- als auch im Zeitbereich der Signale, was Schwierigkeiten bei der Adaption hervorruft.

Der Erfindung liegt daher die Aufgabe zugrunde, eine wirkungsvolle Echokompensation bei Systemen mit Multiträgermodulation mit orthogonalen Teilkanälen zu entwickeln.

Die Aufgabe wird durch die Merkmale der Vorrichtung nach Anspruch 1 und des Verfahrens nach Anspruch 7 gelöst. Bevorzugte Ausgestaltungen der Erfindung sind Gegenstand der Unteransprüche.

Bei dem erfindungsgemäßen Verfahren und Vorrichtung zur Dämpfung von nichtlinearen Echosignalen bei einer Schaltungsanordnung zur Zweidraht-Vierdraht-Umsetzung bei Multiträgermodulation mit orthogonalen Teilkanälen, beispielsweise "Discrete Multitone Modulation (DMT), "Orthogonal Frequency Division Multiplex" (OFDM) oder "Discrete Wavelet Multitone" (DWMT), erfolgt die Modellbildung der Nichtlinearitäten im Frequenzbereich eines Signals, während die nichtlineare Echokompensation im Zeitbereich des Signals erfolgt.

Zur Adaption der nichtlinearen Modellbildung wird ein Pilotton verwendet. Die Nichtlinearitäten des Übertragungssystem, insbesondere des Leitungstreibers, verursachen Harmonische, d.h. es treten Frequenzen bei den geradzahligen Vielfachen der Grundfrequenz auf. Weiter wird diese Grundfrequenz in Betrag und Phase über den linearen Echopfad verändert.

Im Frequenzbereich des Signals setzt sich die Modellbildung von Nichtlinearitäten aus einem linearen Teil und einem nichtlinearen Teil zusammen, wobei der lineare Teil, da nur der Pilotton verwendet wird, sich auf komplexe Zahl a1 (Betrag und Phase) reduziert, bzw. da zwei lineare Modelle notwendig sind, auf zwei komplexe Zahlen a1 und a2. Das nichtlineare Modell wird durch die Abhängigkeit von Grundwelle zu den jeweiligen Oberwellen beschrieben.

Die Adaption erfolgt über ein Fehlersignal, das sich aus der Differenz aus dem empfangenen Signal und dem geschätzten Echo zusammensetzt. Dabei wird zuerst das lineare Modell und dann das nichtlineare Modell adaptiert. Das nichtlineare Modell kann durch eine Taylorreihe angenähert werden. Dabei wird vorzugsweise die Taylorreihe nach dem quadratischen Glied abgebrochen.

Die Koeffizienten des nichtlinearen Modells werden dann in das nichtlineare Zeitmodell transferiert.

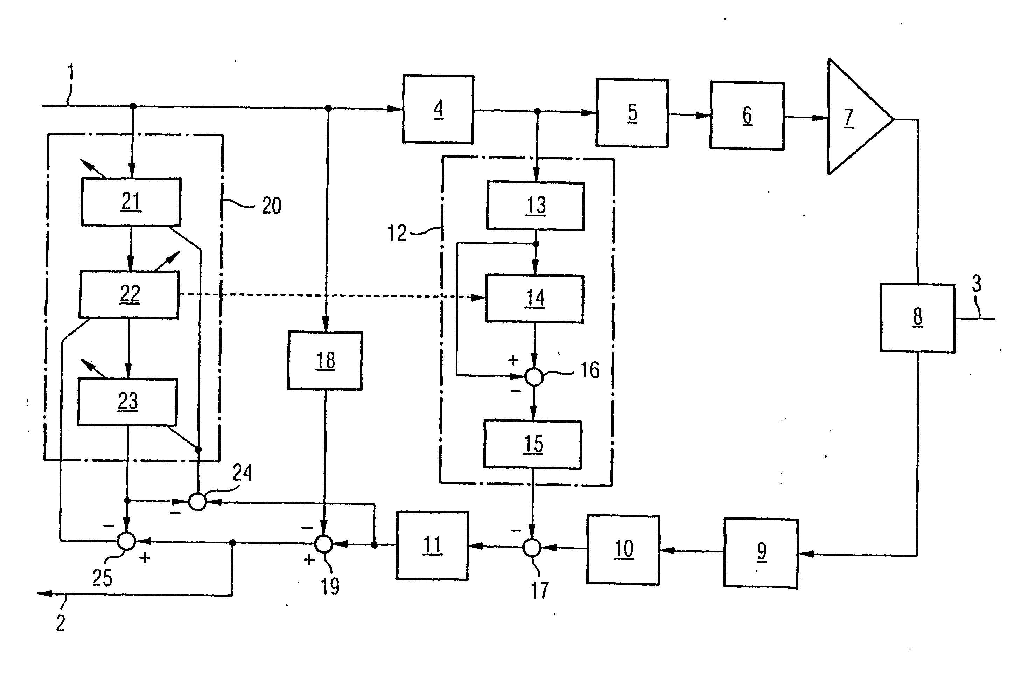

Fig. 1 zeigt ein Schaltschema einer Echokompensation gemäß der Erfindung.

Über einen digitalen Empfangsweg 1 gelangt das Signal über eine IFFT 4 (Inverse Fast Fourier Transformation), einen D/A-Wandler 5, einen Filter 6, einen Leitungstreiber 7 in den Hybrid oder Echopfad 8 und auf einen analogen Sende/Empfangsweg 3. Ein empfangenes analoges Signal gelangt über einen Filter 9, einen A/D-Wandler 10, eine FFT 11 (Fast Fourier Transformation) auf den digitalen Sendeweg 2.

Im Echopfad oder Hybriden 8 gelangt ein Echo des digitalen Sendesignals in den Empfangsweg des digitalen Sendesignal, addiert sich auf das analoge Empfangssignal und führt daher zu Störungen.

Zur Kompensation des Echosignals ist im Zeitbereich, d.h. nach der IFFT 4 bzw. vor der FFT 11, der Schaltungsanordnung ein nichtlinearer Echokompensator 12 vorgesehen, der aus einem ersten Filter 13, einer nichtlinearen Einheit 14 und einem zweiten Filter 15 besteht. Ferner weist der nichtlineare Echokompensator 12 einen Addierer 16 auf, in dem das Signal nach den ersten Filter 13 von dem Signal nach der nichtlinearen Einheit 14 subtrahiert wird. Das Kompensationssignal, d.h. das geschätzte Echo, wird von dem analogen Signal bestehend aus dem Empfangssignal und dem Echo in einem weiteren Addierer 17 subtrahiert.

Ferner weist die Schaltung einen linearen Echokompensator 18 im Frequenzbereich, d.h. vor der IFFT 4 bzw. nach der FFT 11, auf, dessen geschätztes Echosignal in einem Addierer 19 von dem digitalisierten Signal bestehend aus dem Empfangssignal ohne den nichtlineare Echoanteil subtrahiert wird.

Zur Adaption des nichtlinearen Echokompensator 12 weist die Schaltung eine Vorrichtung 20 zur Adaption der Nichtlinearitäten auf, die aus einem ersten linearen Modell 21, einem nichtlinearen Modell 22 und einem zweiten linearen Modell 23 besteht, wobei der Vorrichtung 20 der Pilotton zugeführt wird. Die Adaption des ersten und zweiten linearen Modells 21, 23 erfolgt über ein Fehlersignal, das in einem Addierer 24 aus dem geschätzten Echo und dem Empfangssignal mit dem linearen Echoanteil zusammensetzt. Die Adaption des nichtlinearen Modells erfolgt über ein Fehlersignal, das in einem weiteren Addierer 25 aus dem geschätzten Echo und dem Empfangssignal zusammensetzt. Die Koeffizienten des nichtlinearen Modells 14 werden in die nichtlineare Einheit 14 des nichtlinearen Echokompensators 12 transferiert.

## Patentansprüche

1. Schaltungsanordnung zur Zweidraht-Vierdraht-Umsetzung bei einem DMT-System, die mit einem digitalen Empfangsweg (1), einem digitalen Sendeweg (2) sowie einem analogen Sende-Empfangsweg (3) verbunden ist und die eine Echokompensationsvorrichtung (12) im Zeitbereich aufweist, wobei die Anordnung eine Vorrichtung (20) zur Adaption der Echokompensation im Frequenzbereich aufweist, **dadurch gekennzeichnet, dass** die Echokompensationsvorrichtung nichtlinear ist; und die Vorrichtung (20) zur Adaption der Echokompensation ein erstes lineares Modell (21), ein nichtlineares Modell (22) sowie ein zweites lineares Modell (23) aufweist; und die in der Vorrichtung (20) zur Adaption der Echokompensation ermittelten Koeffizienten des nichtlinearen Modells in eine nichtlineare Einheit (14) der Echokompensationsvorrichtung (12) transferierbar sind.

2. Schaltungsanordnung nach einem der vorangegangenen Ansprüche, **dadurch gekennzeichnet, dass** die Vorrichtung (20) zur Adaption der Echokompensation die Adaption mittels eines Pilottons durchführt.

3. Schaltungsanordnung nach einem der Ansprüche 1 oder 2, **dadurch gekennzeichnet, dass** das erste lineare Modell (21) und das zweite lineare Modell (23) der Vorrichtung (20) zur Adaption der Echokompensation jeweils durch eine komplexe Zahl gebildet sind.

4. Schaltungsanordnung nach einem der Ansprüche 1-3, **dadurch gekennzeichnet, dass** das nichtlineare Modell (22) der Vorrichtung (20) zur Adaption der Echokompensation durch eine Taylorreihe gebildet ist.

5. Schaltungsanordnung nach Anspruch 4, **dadurch gekennzeichnet, dass** die Taylorreihe des nichtlinearen Modells (22) bis zum quadratischen Glied berechnet wird.

6. Schaltungsanordnung nach einem der vorangegangenen Ansprüche, **dadurch gekennzeichnet, dass** der Vorrichtung (20) zur Adaption der Echokompensation eine lineare Echokompensationsvorrichtung (18) im Frequenzbereich parallel geschaltet ist.

7. Verfahren zur Dämpfung von Echosignalen bei einer Schaltungsanordnung zur Zweidraht-Vierdraht-Umsetzung eines mit Multiträgermodulation mit orthogonalen Teilkanälen erzeugten Signals,
wobei die Modellbildung im Frequenzbereich des Signals erfolgt, während die Echokompensation im Zeitbereich des Signals erfolgt, **dadurch gekennzeichnet, dass** die Echokompensationsvorrichtung nichtlinear ist; und die Vorrichtung (20) zur Adaption der Echokompensation ein erstes lineares Modell (21), ein nichtlineares Modell (22) sowie ein zweites lineares Modell (23) aufweist; und die in der Vorrichtung (20) zur Adaption der Echokompensation ermittelten Koeffizienten des nichtlinearen Modells in eine nichtlineare Einheit (14) der Echokompensationsvorrichtung (12) transferiert werden.

8. Verfahren nach Anspruch 7, **dadurch gekennzeichnet, dass** die Modellbildung der Nichtlinearitäten unter Verwendung eines Pilottons erfolgt.

9. Verfahren nach einem der Ansprüche 7 oder 8, **dadurch gekennzeichnet, dass** die Nichtlinearitäten durch eine Taylorreihe abgebildet werden.

10. Verfahren nach Anspruch 9, **dadurch gekennzeichnet, dass** die Taylorreihe nach dem quadratischen Glied abgebrochen wird.

11. Verfahren nach einem der Ansprüche 7 - 10, **dadurch gekennzeichnet, dass** eine lineare Echokompensation im Frequenzbereich des Signals durchgeführt wird.

## Claims

1. Circuit arrangement for two-wire/four-wire conversion in a DMT system which is connected to a digital reception path (1), a digital transmission path (2) and an analogue transmission/reception path (3) and which has an echo compensation device (12) in the time domain, the arrangement having a device (20) for adapting the echo compensation in the frequency domain, **characterized in that** the echo compensation device is nonlinear, and the device (20) for adapting the echo compensation has a first linear model (21), a nonlinear model (22) and a second linear model (23), and the coefficients of the nonlinear model which are determined in the device (20) for adapting the echo compensation can be transferred into a nonlinear unit (14) of the echo compensation device (12).

2. Circuit arrangement according to one of the preceding claims, **characterized in that** the device (20) for adapting the echo compensation carries out the adaptation by means of a pilot tone.

3. Circuit arrangement according to one of Claims 1 or 2, **characterized in that** the first linear model (21) and the second linear model (23) of the device (20) for adapting the echo compensation are each formed by means of a complex number.

4. Circuit arrangement according to one of Claims 1 to 3, **characterized in that** the nonlinear model (22) of the device (20) is formed for adapting the echo compensation by means of a Taylor series.

5. Circuit arrangement according to Claim 4, **characterized in that** the Taylor series of the nonlinear model (22) is calculated as far as the quadratic element.

6. Circuit arrangement according to one of the preceding claims, **characterized in that** the device (20) for adapting the echo compensation has a linear echo compensation device (18) connected in parallel with it in the frequency domain.

7. Method for damping echo signals in a circuit arrangement for two-wire/four-wire conversion of a signal which is generated with multi-carrier modulation with orthogonal component channels, the model being formed in the frequency domain of the signal while the echo compensation is carried out in the time domain of the signal, **characterized in that** the echo compensation device is nonlinear, and the device (20) for adapting the echo compensation has a first linear model (21), a nonlinear model (22) and a second linear model (23), and the coefficients of the nonlinear model which are determined in the device (20) for adapting the echo compensation are transferred into a nonlinear unit (14) of the echo compensation device (12).

8. Method according to Claim 7, **characterized in that** the model of the nonlinearities is formed using a pilot tone.

9. Method according to one of Claims 7 or 8, **characterized in that** the nonlinearities are mapped by means of a Taylor series.

10. Method according to Claim 9, **characterized in that** the Taylor series is aborted after the quadratic element.

11. Method according to one of Claims 7 to 10, **characterized in that** a linear echo compensation is carried out in the frequency domain of the signal.

## Revendications

1. Circuit de conversion deux fils/quatre fils dans un système DMT, qui est connecté à une voie de réception numérique (1), à une voie d'émission numérique (2) ainsi qu'à une voie d'émission/réception analogique (3) et qui présente un dispositif de compensation d'écho non linéaire dans le domaine du temps, le circuit présentant un dispositif (20) pour l'adaptation de la compensation d'écho dans le domaine des fréquences, **caractérisé en ce que** le dispositif de compensation d'écho est non linéaire; et le dispositif (20) pour l'adaptation de la compensation d'écho présente un premier modèle linéaire (21), un modèle non linéaire (22) ainsi qu'un second modèle linéaire (23); et les coefficients du modèle non linéaire obtenus dans le dispositif (20) pour l'adaptation de la compensation d'écho peuvent être transférés dans une unité non linéaire (14) du dispositif de compensation d'écho (12).

2. Circuit selon l'une quelconque des revendications précédentes, **caractérisé en ce que** le dispositif (20) pour l'adaptation de la compensation d'écho réalise l'adaptation au moyen d'une tonalité pilote.

3. Circuit selon l'une quelconque des revendications 1 ou 2, **caractérisé en ce que** le premier modèle linaire (21) et le second modèle linéaire (23) du dispositif (20) pour l'adaptation de la compensation d'écho sont formés respectivement par un nombre complexe.

4. Circuit selon l'une quelconque des revendications 1 à 3, **caractérisé en ce que** le modèle non linéaire (22) du dispositif (20) pour l'adaptation de la compensation d'écho est formé par une série de Taylor.

5. Circuit selon la revendication 4, **caractérisé en ce que** la série de Taylor du modèle non linéaire (22) est calculé jusqu'à l'élément carré.

6. Circuit selon l'une quelconque des revendications, **caractérisé en ce qu'**un dispositif de compensation d'écho linéaire (18) dans le domaine des fréquences est monté parallélement au dispositif (20) pour l'adaptation de la compensation d'écho.

7. Procédé d'amortissement des signaux d'écho dans un circuit de conversion deux fils/quatre fils d'un signal produit par modulation à porteuses multiples avec des canaux partiels orthogonaux,
dans lequel la modélisation se fait dans le domaine des fréquences du signal, tandis que la compensation d'écho se fait dans le domaine du temps du signal, **caractérisé en ce que** le dispositif de compensation d'écho est non-linéaire; et le dispositif (20) pour l'adaptation de la compensation d'écho présente un premier modèle linéaire (21), un modèle non linéaire (22) ainsi qu'un second modèle linéaire (23); et les coefficients du modèle non linéaire obtenu dans le dispositif (20) pour l'adaptation de la compensation d'écho peuvent être transférés dans une unité non linéaire (14) du dispositif de compensation d'écho (12).

8. Procédé selon la revendication 7, **caractérisé en ce que** la modélisation des non-linéarités se fait en utilisant une tonalité pilote.

9. Procédé selon l'une quelconque des revendications 7 ou 8, **caractérisé en ce que** les non-linéarités sont formées par une série de Taylor.

10. Procédé selon la revendication 9, **caractérisé en ce que** la série de Taylor est interrompue après l'élément carré.

11. Procédé selon l'une quelconque des revendications 7 à 10, **caractérisé en ce qu'**une compensation d'écho linéaire est réalisée dans le domaine des fréquences du signal.
